# EUROPEAN PATENT APPLICATION

(11) **EP 4 787 156 A1**
(43) Date of publication of application: **05.08.2026**
(21) Application number: 26153829.2
(22) Date of filing: 23.01.2026
(51) Int. Cl.: G06F 8/71, G06T 3/4053, G06V 10/82, G06V 30/16

(54) **GIT-BASED SOFTWARE GENERATING METHOD AND COMPUTING DEVICE**

(30) Priority: 04.02.2025 TW 114103997
(71) Applicant: Acer Incorporated, New Taipei City 221 (TW)
(72) Inventor: PENG, Meng-Chih, New Taipei City 221 (TW)
(74) Representative: dompatent

(57) **Abstract**

An aspect of the present disclosure features git-based software generating method. The method includes, by a computing device, configuring a software output setting. The method also includes, by the computing device, receiving a QR code corresponding to code information. The method also includes, by an Al model of the computing device, analyzing the QR code to obtain the code information corresponding to the QR code. The method also includes, by the computing device, downloading codes corresponding to the code information according to the code information. The method also includes, by the computing device, outputting a software according to the codes and a software output configuration.

## Description

### TECHNICAL FIELD

The disclosure relates in general to a git-based software generating method, and more particularly, to techniques of a computing device of using Al model to parse two-dimensional barcodes based on git to generate software.

### BACKGROUND

With current applications of git (distributed version control software system), multiple developers can collaborate on a software project, and the code completed by individual developers can be stored on the git server for synchronization to their respective development environments. When the final codes are integrated for outputting a software, it is often necessary to list all the version branches used by each project, or even a specific commit within that branch. The personnel responsible for releasing the software version needs to manually produce and review the content of each project based on the information provided by each developer. Additionally, during this manual process, the combination of various program components needs to be manually adjusted by the personnel responsible for distribution. In addition, the personnel responsible for distribution are usually not only responsible for distributing a single software project, and each software project may have more than one version. Therefore, there are needs for techniques that can automatically generate multiple projects and multiple versions of software.

### SUMMARY

The techniques provided by the present disclosure use an Al model to parse two-dimensional barcodes (QR codes) corresponding to code information to automatically generate software based on git, thereby reducing human error and ensuring the correctness of the generated software version and related software components.

The first aspect of the present disclosure features a software generating method based on distributed version control software system (git). The software generating method includes setting, by a computing device, a software output configuration. The software generating method also includes receiving, by the computing device, at least one two-dimensional barcode corresponding to at least one code information. The software generating method also includes parsing, by an artificial intelligence (AI) model in the computing device, the at least one two-dimensional barcode to obtain at least one code of the at least one code information corresponding to each of the at least one two-dimensional barcode. The software generating method also includes downloading, by the computing device, the at least one code corresponding to the code information from a git server according to the at least one code information. The software generating method also includes generating, by the computing device, a software according to the at least one code and the software output configuration.

The second aspect of the present disclosure features a computing device for generating a software based on distributed version control software system (git). The computing device includes a processing unit configured to execute an Al model. The computing device also includes a communication interface coupled to a git server and configured to receive at least one two-dimensional barcode corresponding to at least one code information. The computing device also includes a configuration interface configured to set an output configuration of the software. The processing unit executes the Al model to parse the at least one two-dimensional barcode for obtaining the at least one code information corresponding to each of the at least one two-dimensional barcode. The computing device downloads at least code of the at least code information from the git server, and generates the software according to the at least one code and the software output configuration.

The third aspect of the present disclosure features a system for generating a software based on distributed version control software system (git). The system includes multiple first computing devices configured to convert multiple code information into multiple two-dimensional barcodes. The system also includes a git server configured to store multiple codes corresponding to the multiple code information. The system also includes a second computing device. The second computing device includes a processing unit configured to execute an Al model. The second computing device also includes a communication interface coupled to a git server and configured to receive the multiple two-dimensional barcodes from the multiple first computing devices. The second computing device includes a configuration interface configured to set an output configuration of the software. The processing unit executes the Al model to parse the multiple two-dimensional barcodes for obtaining the multiple code information corresponding to each of the multiple two-dimensional barcodes. The second computing device downloads the multiple codes corresponding to the multiple code information from the git server according to the multiple code information, and generates the software according to the multiple codes and the software output configuration.

The details of one or more disclosed implementations are set forth in the accompanying drawings and the description below. Other features, aspects, and advantages will become apparent from the description, the drawings and the claims.

### BRIEF DESCRIPTION OF THE DRAWINGS

FIG. 1 is a block diagram illustrating a computing device for generating software based on git, according to some implementations of the present disclosure.
FIG. 2 is a flowchart illustrating a software generating procedure based on git, according to some implementations of the present disclosure.
FIG. 3 is a diagram illustrating software generated based on git, according to some implementations of the present disclosure.

In the following detailed description, for purposes of explanation, numerous specific details are set forth in order to provide a thorough understanding of the disclosed implementations. It will be apparent, however, that one or more implementations may be practiced without these specific details. In other instances, well-known structures and devices are schematically shown in order to simplify the drawing.

### DETAILED DESCRIPTION

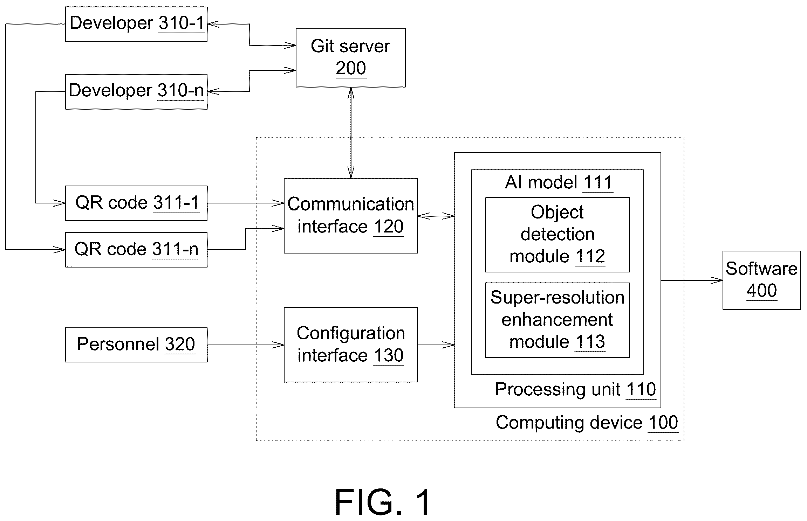

FIG. 1 is a block diagram illustrating a computing device 100 for generating software 400 based on git, according to some implementations of the present disclosure. The computing device 100 includes a processing unit 110 for executing an Al model 111. The Al model 111 can be used to parse one or more QR codes received by the computing device 100. The Al model 111 includes an object detection module 112 for detecting one or more QR codes received by the computing device 100, such as one or more QR codes of QR code 311-1 to QR code 311-n. The object detection module 112 can be implemented, for example, using YOLO. The Al model 111 also includes a super-resolution enhancement module 113, which can be used to increase the resolution of one or more QR codes received by the computing device 100, in order to parse the one or more QR codes received by the computing device 100. The super-resolution enhancement module can be implemented, for example, through SRCNN, which is a computational model based on CNN (convolutional neural network). The computing device 100 also includes a communication interface 120 for receiving one or more QR codes, and the communication interface 120 is coupled to the git server 200. The computing device 100 also includes a configuration interface 130 for setting the output configuration of the software 400.

When one or more software programs are under developing, multiple developers, such as developers 310-1 to 310-n, can synchronize their respective codes on the git server 200 through their respective computing devices, such as desktop computers, laptops, or tablets. When the software needs to be released, the personnel responsible for releasing the software version, such as the personnel 320, can set the output configuration of the software 400 on the setting interface 130 of the computing device 100. The output configuration may include, for example, the project name of the software to be released, the software project version to be released, the software components it includes, and the operating system and platform to which the software is applicable. The respective developers, such as developers 310-1 to 310-n, can provide code information corresponding to their respective developed codes to the computing device 100 used by the personnel 320 through their respective computing devices, such as desktop computers, laptops, or tablets, for the software to be released this time. The code information may include project name, target project version, software component version, author information, code URL, software release date, and software change history. Using the techniques provided by the implementations by the present disclosure, the above code information can be converted into a corresponding QR code (also referred as two-dimensional barcode) and transmitted to the computing device 100. In some implementations, the communication interface 120 of the computing device 100 may receive QR codes, such as one or more of QR codes 311-1 to 311-n, as email attachments. As discussed above, these QR codes correspond to code information provided by different developers. Then, after the computing device 100 receives these QR codes, it can use the Al model 111 to parse these QR codes to obtain the code information corresponding to these QR codes. In some implementations, Al model 111 can be operated in the background of the operating system of computing device 100 and parse QR codes without displaying QR codes on the screen. For example, when the communication interface 120 of computing device 100 receives a QR code as an email attachment, the Al model 111 can directly detect the QR code through object detection module 112, and then increase the resolution of the QR code through super-resolution enhancement module 113 to parse the QR code, without opening the QR code in the email attachment. In other words, it can parse the QR code in the background and obtain the code information corresponding to the QR code. Then, after obtaining the relevant code information, the computing device 100 can download the corresponding codes from the git server 200 based on the relevant code information, and use the codes and software output configuration to generate the software 400 to be released.

As discussed above, it can be understood that the techniques provided by implementations of the present disclosure automates software distribution by using QR Code. The Al model automatically identifies and parses the QR Code received by the computer device. Personnel responsible for distributing the software do not need to manually select the software components to be used and the related versions, thereby avoiding manual errors.

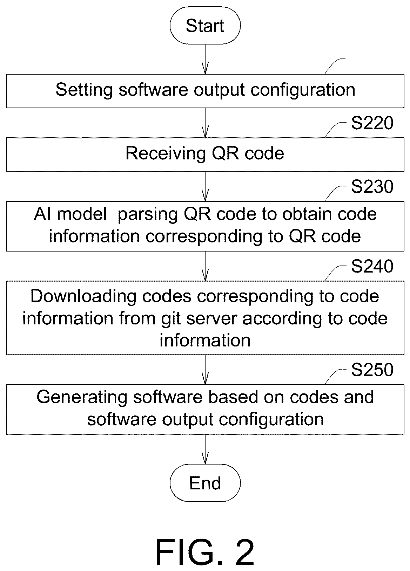

FIG. 2 is a flowchart illustrating a software generating procedure based on git, according to some implementations of the present disclosure. In step S210, for example, software output configuration are set, by the configuration interface 130 of the computing device 100 in FIG. 1 for example.

In step S220, a QR code, such as one or more, or at least one, of QR codes 311-1 to QR codes 311-n in FIG.1, is received, by the communication interface 120 of the computing device 100 for example.

In step S230, the QR code is parsed, by the AI model 111 of the computing device 100 for example, to obtain the code information corresponding to the QR code.

In step S240, the computing device 100, for example, downloads the codes corresponding to the code information from the git server according to the code information.

In step S250, the computing device 100, for example, generates software based on the codes and software output configuration.

In certain configurations, the Al model includes an object detection module configured to detect the QR code; and a super-resolution enhancement module configured to increase a resolution of the QR code for parsing the QR code.

In certain configurations, the AI model is operated in a background of an operating system of the computing device and parses the QR code without displaying the QR code.

In certain configurations, the computing device receives the QR code as an email attachment, and the AI model parses the QR code without opening the QR code.

In certain configurations, the code information includes one or more of: a project name, a target project version, a software component version, author information, a code URL, a software release date and a software log.

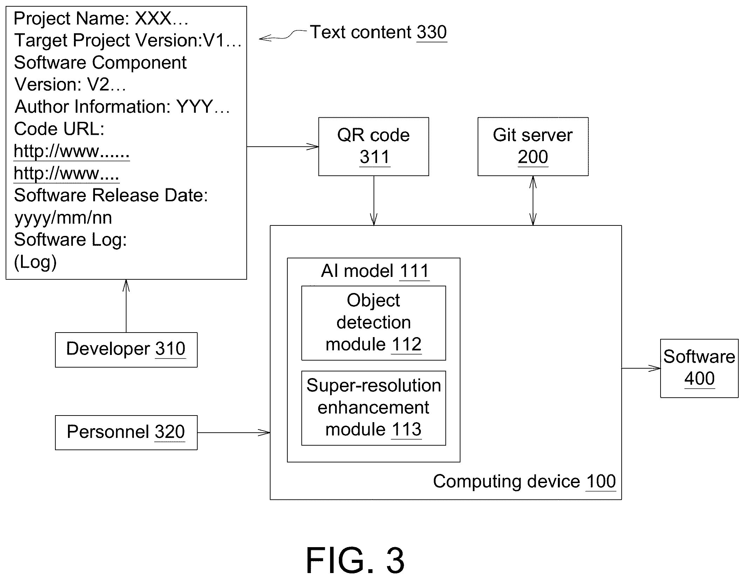

FIG. 3 is a diagram illustrating software 400 generated based on git, according to some implementations of the present disclosure. Specifically, when the developer 310 organizes the corresponding code information of the software to be released into text content 330, for example, the text content 330 can be converted into the corresponding QR code 330 through the developer's own computing device. After receiving the QR code 330, the computing device 100 used by the software release personnel 320 will parse the QR code 330, and according to the text content 330 represented by the QR code 330 and the software release configuration (e.g., it must conform to the project name, project version, etc. of the software to be released), download the relevant code from the git server and automatically integrate it into the software 400 to be released. Accordingly, when a large number of developers provide a large amount of code information, using the techniques provided by the present disclosure can greatly reduce the manual operations of the developers and reduce errors generated during software distribution.

A computer program (also known as a program, software, software disclosure, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in a plurality of coordinated files (e.g., files that store one or more modules, sub programs, or portions of code).A computer program can be deployed for execution on one computer or on a plurality of computers that are located at one site or distributed across a plurality of sites and interconnected by a communications network.

The processes and logic flows described in this document can be performed by one or more programmable processors executing one or more computer programs to perform the functions described herein. The processes and logic flows can also be performed by, and apparatus can also be implemented as, special purpose logic circuitry, e.g., an FPGA (field programmable gate array) or an ASIC (application specific integrated circuit).

Processors, processing units, engines, and accelerators suitable for the execution of a computer program include, by way of example, both general and special purpose microprocessors, and any one or more processors of any kind of digital computer. Generally, a processor, a processing unit, an engine, or an accelerator will receive instructions and data from a read only memory or a random access memory or both. The essential elements of a computer can include a processor, a processing unit, an engine, or an accelerator for performing instructions and one or more memory devices for storing instructions and data. Generally, a computer can also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data can include all forms of nonvolatile memory, media and memory devices, including by way of example semiconductor memory devices, e.g., EPROM, EEPROM, and flash memory devices; magnetic disks. The processor, the processing unit, the engine, or the accelerator and the memory can be supplemented by, or incorporated in, special purpose logic circuitry, such as other processors, processing units, engines, or accelerators.

While this document may describe many specifics, these should not be construed as limitations on the scope of an invention that is claimed or of what may be claimed, but rather as descriptions of features specific to particular implementations. Certain features that are described in this document in the context of separate implementations can also be implemented in combination in a single embodiment. Conversely, various features that are described in the context of a single embodiment can also be implemented in a plurality of implementations separately or in any suitable sub-combination. Moreover, although features may be described above as acting in certain combinations and even initially claimed as such, one or more features from a claimed combination in some cases can be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made according to what is disclosed.

## Claims

1. A software generating method, based on distributed version control software system (git), comprising:
setting, by a computing device (100), a software output configuration;
receiving, by the computing device (100), at least one two-dimensional barcode (311) corresponding to at least one code information (330);
parsing, by an artificial intelligence (AI) model (111) in the computing device (100), the at least one two-dimensional barcode (311) to obtain at least one code of the at least one code information (330) corresponding to each of the at least one two-dimensional barcode (311);
downloading, by the computing device (100), at least one code corresponding to the at least one code information (330) from a git server (200) according to the at least one code information (311); and
generating, by the computing device (100), a software (400) according to the at least one code and the software output configuration.

2. The software generating method of claim 1, wherein the Al model (111) comprises:
an object detection module (112), configured to detect the at least one two-dimensional barcode (311); and
a super-resolution enhancement module (113), configured to increase a resolution of the at least one two-dimensional barcode (311) for parsing the at least one two-dimensional barcode.

3. The software generating method of claim 1, wherein the Al model (111) is operated in a background of an operating system and parses the at least one two-dimensional barcode (311) without displaying the at least one two-dimensional bar barcode (311).

4. The software generating method of claim 3, wherein the computing device (100) receives the at least one two-dimensional barcode (311) as an email attachment, and the Al model (111) parses the at least one two-dimensional barcode (311) without opening the at least one two-dimensional barcode (311).

5. The software generating method of claim 1, wherein the code information (330) includes one or more of:
a project name, a target project version, a software component version, author information, a code URL, a software release date and a software log.

6. A computing device (100), for generating a software (400) based on distributed version control software system (git), the computing device (100) comprising:
a processing unit (110), configured to execute an Al model (111);
a communication interface (120), coupled to a git server (200) and configured to receive at least one two-dimensional barcode (311) corresponding to at least one code information (330); and
a configuration interface (130), configured to set an output configuration of the software (400),
wherein the processing unit (100) executes the Al model (111) to parse the at least one two-dimensional barcode (311) for obtaining the at least one code information (330) corresponding to each of the at least one two-dimensional barcode (311),
wherein the computing device (100) downloads at least code of the at least code information (330) from the git server (200), and generates the software (400) according to the at least one code and the software output configuration.

7. The computing device of claim 6, wherein the Al model (111) comprises:
an object detection module (112), configured to detect the at least one two-dimensional barcode (311); and
a super-resolution enhancement module (113), configured to increase a resolution of the at least one two-dimensional barcode (311) for parsing the at least one two-dimensional barcode (311).

8. The computing device of claim 7, wherein the Al model (111) is operated in a background of an operating system of the computing device (100) and parses the at least one two-dimensional barcode (311) without displaying the at least one two-dimensional bar barcode (311).

9. The computing device of claim 8, wherein the computing device (100) receives the at least one two-dimensional barcode (311) as an email attachment, and the Al model (111) parses the at least one two-dimensional barcode (311) without opening the at least one two-dimensional barcode (311).

10. The computing device of claim 6, wherein the code information (330) includes one or more of:
a project name, a target project version, a software component version, author information, a code URL, a software release date and a software log.

11. A system, for generating a software based on distributed version control software system (git), the system comprising:
a plurality of first computing devices (310) , configured to convert a plurality of code information (330) into a plurality of two-dimensional barcodes (311);
a git server (200), configured to store a plurality of codes corresponding to the plurality of code information (311); and
a second computing device (100), comprising:
a processing unit (110), configured to execute an Al model (111);
a communication interface (120), coupled to a git server (200) and configured to receive the plurality of two-dimensional barcodes (311) from the plurality of first computing devices (310); and
a configuration interface (130), configured to set an output configuration of the software (400),
wherein the processing unit (100) executes the Al model (111) to parse the plurality of two-dimensional barcodes (311) for obtaining the plurality of code information (330) corresponding to each of the plurality of two-dimensional barcodes (311),
wherein the second computing device (100) downloads the plurality of codes corresponding to the plurality of code information (330) from the git server (200) according to the plurality of code information (330), and generates the software (400) according to the plurality of codes and the software output configuration.

12. The system of claim 11, wherein the Al model (111) comprises:
an object detection module (112), configured to detect the plurality of two-dimensional barcodes (311); and
a super-resolution enhancement module (113), configured to increase a resolution of the plurality of two-dimensional barcodes (311) for parsing the plurality of two-dimensional barcodes (311).

13. The system of claim 12, wherein the Al model (111) is operated in a background of an operating system of the computing device (100) and parses the plurality of two-dimensional barcodes (311) without displaying the plurality of two-dimensional bar barcodes (311).

14. The system of claim 13, wherein the computing device (100) receives the plurality of two-dimensional barcodes (311) as an email attachment, and the Al model (111) parses the plurality of two-dimensional barcodes (311) without opening the plurality of two-dimensional barcodes (311).

15. The system of claim 11, wherein each of the plurality of code information (330) includes one or more of:
a project name, a target project version, a software component version, author information, a code URL, a software release date and a software log.
